# EUROPÄISCHE PATENTSCHRIFT

(11) **EP 0 771 126 B1**
(45) Veröffentlichungstag und Bekanntmachung des Hinweises auf die Patenterteilung: **06.12.2006**
(21) Anmeldenummer: 96116504.0
(22) Anmeldetag: 15.10.1996
(51) Int. Cl.: H04Q 7/22, H04Q 7/28, H04Q 7/32

(54) **Verfahren und Kommunikationssystem zur Anzeige von Rufnummern an Teilnehmerstationen von Teilnehmern bei Gruppenanrufen**
Method and communication system for displaying caller identification on subscriber stations in case of group calls
Procédé et système de communication pour l'affichage de numéros d'appelants sur les stations d'abonnés en cas d'appels de groupe

(30) Priorität: 27.10.1995 DE 19540171
(43) Veröffentlichungstag der Anmeldung: 02.05.1997
(73) Patentinhaber: SIEMENS AKTIENGESELLSCHAFT, 80333 München (DE)
(72) Erfinder: Wiehe, Ulrich, 36251 Bad Hersfeld (DE)

(56) Entgegenhaltungen:
- US-A- 5 274 699

## Beschreibung

Die Erfindung betrifft ein Verfahren und eine Anordnung zur Anzeige von Rufnummern an Teilnehmerstationen von Teilnehmern, die Gruppenanrufe, die an mehrere Funkteilnehmer einer Gruppe gerichtet werden, als besondere Gruppenmitglieder dieser Gruppe initiieren oder empfangen, gemäß dem Oberbegriff des Patentanspruchs 1 bzw. des Patentanspruchs 6.

US-A-5 274 699 beschreibt einen repeater eines Kommunikationssystems, über welchen Mobilstationen kommunizieren können. Der repeater weist eine Datenbasis auf , in welcher unter anderem individuelle User IDs und weitere Informationen wie Gruppenrufinformationen für die einzelnen individuellen Units und generell noch weitere Informationen gespeichert sind. Letztere weitere Informationen können Alias- Identifikations-Informationen (alias IDs) sein. Mögliche Alias IDs sind beispielsweise Namen, Gruppen von Buchstaben Zahlen oder Symbolen, Unit-Identifikationen oder Units-Aliases. Aus diesen Alias- Identifikations- Informationen kann der user auswählen.

In Mobilfunknetzen, wie beispielsweise dem nach dem GSM-Standard (Global System for Mobile Communication), wie in Festnetzen besteht die Möglichkeit, daß die Rufnummer des anrufenden Teilnehmers an der Teilnehmerstation des angerufenen Teilnehmers (CLIP, Calling Line Identiy Presentation) und die Rufnummer des verbundenen Teilnehmers an der Teilnehmerstation des anrufenden Teilnehmers (COLP, Connected Line Identity Presentation) angezeigt werden. Wenn bei einem Gruppenanruf (VBS, Voice Broadcast Service; VGCS, Voice Group Call Service jeweils eine Gruppe von Funkteilnehmern eines Mobilfunknetzes angerufen wird, können ein oder mehrere besondere Gruppenmitglieder (dispatcher), die keine Funkteilnehmer sein müssen, mit in die Anrufverbindung aufgenommen werden. Diese besonderen Gruppenmitglieder sind auch Anrufverbindungen in einem leitungsgebundenen Kommunikationsnetz, z.B. durch Standardverbindungen im öffentlichen Fernsprechnetz, erreichbar. Daraus folgt, daß die Rufnummer des anrufenden Teilnehmers an der Teilnehmerstation des durch den Gruppenanruf angerufenen besonderen Gruppenmitglieds angezeigt wird. Das besondere Gruppenmitglied kann anhand der angezeigten Rufnummer, die bei der Standardanrufverbindung dieselbe ist wie bei der Gruppenanrufverbindung, weder erkennen, daß es sich um einen Gruppenanruf handelt, noch feststellen, welche Art von Gruppenanruf (VBS oder VGSC) vorliegt. Das besondere Gruppenmitglied wird auf Grund der Anzeige in der Regel davon ausgehen, daß eine Standardverbindung aufgebaut wurde, was insbe-Standardanrufverbindung dieselbe ist wie bei der Gruppenanrufverbindung, weder erkennen, daß es sich um einen Gruppenanruf handelt, noch feststellen, welche Art von Gruppenanruf (VBS oder VGSC) vorliegt. Das besondere Gruppenmitglied wird auf Grund der Anzeige in der Regel davon ausgehen, daß eine Standardverbindung aufgebaut wurde, was insbesondere dann zu Verwirrungen führen kann, wenn es sich um einen Gruppenanruf (VBS) handelt, bei dem von den mithörenden Funkteilnehmern der Gruppe kein Dialog möglich ist. Bei Gruppenanrufen ist auch vorgesehen, dem besonderen Gruppenmitglied, das einen Gruppenanruf initiiert hat, die Rufnummer des angerufenen und verbundenen Teilnehmers an der Teilnehmerstation anzuzeigen.

Es ist Aufgabe der vorliegenden Erfindung, ein Verfahren und ein Kommunikationssystem zur Anzeige von Rufnummern an Teilnehmerstationen der eingangs genannten Art anzugeben, durch das bei Gruppenanrufen der Service bei der Rufnummernanzeige für die besonderen Gruppenmitglieder (dispatcher) der Gruppe verbessert wird. Darüber hinaus soll eine entsprechende Teilnehmerstation angegeben werden.

Diese Aufgabe wird gemäß der Erfindung durch die Merkmale des Patentanspruchs 1 hinsichtlich des Verfahrens gelöst. Weiterbildungen der Erfindung sind in den Unteransprüchen angegeben. Der Patentanspruch 6 und der Patentanspruch 7 enthalten die Merkmale des Kommunikationssystems und der Teilnehmerstation gemäß der Erfindung zur Lösung der Aufgabe.

Im Mobilfunknetz wird bei einem Gruppenanruf die Rufnummer des anrufenden Gruppenmitglieds oder die Rufnummer des angerufenen Gruppenmitglieds durch eine Rufnummer der Gruppe, die von einem besonderen Gruppenmitglied bei Initiieren desselben Gruppenanrufs gewählt wird, ersetzt und an der Teilnehmerstation des von dem Gruppenanruf betroffenen besonderen Gruppenmitglieds angezeigt. Das besondere Gruppenmitglied(dispatcher) ist durch eine Anrufverbindung in einem leitungsgebundenen Kommunikationsnetz erreichbar und kann in den Gruppenanruf eingebunden werden. Durch die beim besonderen Gruppenmitglied anstelle der Rufnummer des anrufenden Teilnehmers angezeigte Rufnummer der Gruppe, die die Gruppe von Funkteilnehmern sowie die Art des Gruppenanrufs (VBS oder VGSC) und den Servicebereich kennzeichnet, kann das angerufene besondere Gruppenmitglied eindeutig zwischen einer Standardanrufverbindung und einer Gruppenanrufverbindung unterscheiden.

Es ist von Vorteil, wenn bei Aussenden des Gruppenanrufs durch einen Teilnehmer der Gruppe die Rufnummer der Gruppe beim angerufenen besonderen Gruppenmitglied angezeigt wird (CLIP). Dabei kann auch die Rufnummer des Teilnehmers, der den Gruppenanruf initiiert hat, als Adressenzusatzinformation angezeigt werden.

Es ist weiter von Vorteil, wenn bei einem Standardanruf, der von einem Teilnehmer initiiert und an ein besonderes Gruppenmitglied einer Gruppe von Funkteilnehmern gerichtet wird, das den Anruf als Gruppenanruf zu mehreren Funkteilnehmern dieser Gruppe umlenkt, die Rufnummer der angerufenen Gruppe an der Teilnehmerstation des anrufenden Teilnehmers angezeigt wird (COLP).

Neben dem verbesserten Zusammenwirken von Gruppenanruf und Rufnummernanzeige beim anrufenden Teilnehmer und beim angerufenen Teilnehmer, bietet die Erfindung den zusätzlichen Vorteil, die Voraussetzungen für einen erfolgreichen Aufbau einer Anrufverbindung bei Gruppenanrufen im Zusammenhang mit der Anzeige von Rufnummern zu unterstützen.

Die Erfindung wird anhand eines in Figuren dargestellten Ausführungsbeispiels näher erläutert. Im einzelnen zeigen
- Figur 1: den Verbindungsaufbau in einem Mobilfunknetz zur Rufnummernanzeige bei einem durch einen Gruppenanruf angerufenen besonderen Gruppenmitglied und
- Figur 2: den Verbindungsaufbau im Mobilfunknetz zur Rufnummernanzeige bei einem einen Gruppenanruf initiierenden besonderen Gruppenmitglied.

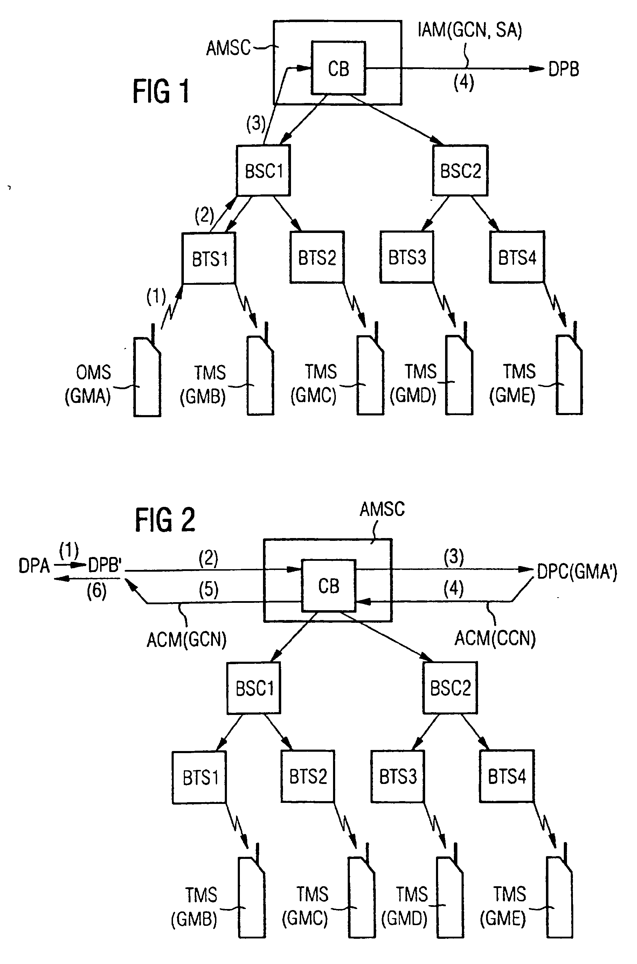

Figur 1 zeigt in einem Blockschaltbild die Einrichtungen eines Mobilfunknetzes zum Aufbau einer Anrufverbindung bei einem Gruppenanruf, der von einem Festnetzteilnehmer, der eine leitungsgebundene Teilnehmerrufnummer aufweist, als besonderes Gruppenmitglied (dispatcher) zu einer Gruppe von mehreren Funkteilnehmern aufgebaut wird. Das Mobilfunknetz ist zellular aus mehreren Funkzellen aufgebaut, in denen jeweils mindestens eine Basis-Sende/Empfangsstation zur Funkübertragung der Informationen über die Luftschnittstelle zu bzw. von Funkteilnehmerstationen der Funkteilnehmer angeordnet ist. Mehrere Basis-Sende/Empfangsstationen sind jeweils an eine gemeinsame Basisstationssteuerung angeschlossen. Die Basis-Sende/Empfangsstationen und die Basisstationssteuerungen bilden zusammen das Funkübertragungssystem im Mobilfunknetz. Neben dem Funkübertragungssystem weist jedes Mobilfunknetz auch ein Vermittlungssystem mit mehreren Mobilvermittlungsstellen auf, von denen jeweils die vermittlungstechnischen Funktionen zum Aufbau einer Anrufverbindung für ankommende und abgehende Anrufe in einem lokal begrenztem Aufenthaltsgebiet (Location Area) übernommen werden.

Figur 1 zeigt lediglich einen Ausschnitt des zellular aufgebauten Mobilfunknetzes mit Basis-Sende/Empfangsstationen BTS1...BTS4, Basisstationssteuerungen BSC1 und BSC2 und mit einer Mobilvermittlungsstelle AMSC, die die Anrufverbindungen auf Grund des Gruppenanrufs herstellt. Dabei sind die Basis-Sende-/Empfangsstationen BTS1 und BTS2 an die Basisstationssteuerung BSC1 und die Basis-Sende/Empfangsstationen BTS3 und BTS4 an die Basisstationssteuerung BSC2 angeschlossen. Beide Basisstationssteuerungen BSC1 und BSC2 sind an die Mobilvermittlungsstelle AMSC angeschaltet, die eine Einrichtung CB zur Konferenzschaltung mehrerer Teilnehmer aufweist. Über Funkteilnehmerstationen OMS bzw. TMS können Funkteilnehmer Anrufe zum Mobilfunknetz aussenden bzw. Anrufe vom Mobilfunknetz empfangen.

Im vorliegenden Beispiel ist angenommen, daß der Gruppenanruf von einem besonderen Gruppenmitglied GMA einer Gruppe von Funkteilnehmern über seine Funkteilnehmerstation OMS initiiert wird. Dazu genügt die Eingabe eines kurzen Codes, durch den der Anruf als Gruppenanruf im Netz erkennbar ist, sowie einer Information zur Identifikation der angerufenen Gruppe. Der Gruppenanruf könnte aber auch von einem Festnetzteilnehmer (dispatcher) ausgelöst werden, der ein besonderes Mitglied der Gruppe ist. Über die Luftschnittstelle werden die eingegebenen Informationen zusammen mit einer Identifikation des anrufenden Gruppenmitglieds GMA über die Basis-Sende/Empfangsstation BTS1 (1) und die Basisstationssteuerung BSC1 (2) zur Mobilvermittlungsstelle AMSC übertragen (3). Der empfangenen Identifikation des anrufenden Gruppenmitglieds GMA wird eine Rufnummer von der Mobilvermittlungsstelle AMSC zugeordnet, die in einem zugehörigen Besucherregister gesoeichert ist. Von der Mobilvermittlungsstelle AMSC wird anschließend die Rufnummer des anrufenden Gruppenmitglieds durch die Rufnummer GCN der Gruppe ersetzt und die Einrichtung CB zur Konferenzschaltung mehrerer Funkteilnehmer der angerufenen Gruppe aktiviert. Von der Mobilvermittlungsstelle AMSC wird eine Adressennachricht IAM mit der Rufnummer GCN der Gruppe und mit der Rufnummer des anrufenden Funkteilnehmers als Adressenzusatzinformation SA zum angerufenen besonderen Gruppenmitglied DPB der Gruppe von Funkteilnehmern ausgesendet und an dessen Teilnehmerstation angezeigt (4).

Dies bedeutet, daß gemäß der Erfindung dem angerufenen besonderen Gruppenmitglied DPB nicht die Rufnummer des den Gruppenanruf initiierenden Teilnehmers GMA, sondern die Rufnummer angezeigt wird, die von dem angerufenen besonderen Gruppenmitglied DPB bei Aussenden desselben Gruppenanrufs zu den mithörenden Gruppenmitliedern GMB...GME derselben Gruppe in dem selben Servicegebiet gewählt würde. Die Anrufverbindungen zu den Funkteilnehmerstationen TMS der Gruppenmitglieder GMB und GMC werden über die Basisstationssteuerung BSC1 und die Basis-Sende/Empfangsstationen BTS1 und BTS2 hergestellt. Die Anrufverbindungen zu den Funkteilnehmerstationen TMS der Gruppenmitglieder GMD und GME werden über die Basisstationssteuerung BSC2 und über die Basis-Sende/Empfangsstationen BTS3 und BTS4 aufgebaut. Die an Stelle der Rufnummer des anrufenden Gruppenmitglieds GMA an der Teilnehmerstation des angerufenen besonderen Gruppenmitglieds DPB angezeigte Rufnummer GCN enthält Informationen zur Identifikation der Art des Gruppenanrufs (VBS- oder VGCS-indication), zur Identifikation des Servicegebiets (Service Area Identity), sowie zur Identifikation der jeweiligen Gruppe von Teilnehmern (Group Identity).

Figur 2 zeigt dieselben Einrichtungen des Mobilfunknetz zum Aufbau einer Anrufverbindung bei einem Anruf, der von einem besonderen Gruppenmitglied DPA (Dispatcher A) einer Gruppe von Teilnehmern initiiert und an ein besonderes Gruppenmitglied DPB' (Dispatcher B') derselben Gruppe gerichtet ist (1), zu der auch ein besonderes Gruppenmitglied DPC (Dispatcher C) gehört. Auf Grund einer für das angerufene besondere Gruppenmitglied DPB' eingerichteten Anrufumlenkung wird der Anruf als Gruppenanruf zu dem besonderen Gruppenmitglied DPC und zu mehreren Gruppenmitgliedern GMB...GME der Gruppe umgeleitet (2, 3). Die mithörenden Gruppenmitglieder GMB...GME sind Funkteilnehmer, die über ihre Funkteilnehmerstationen TMS erreichbar sind. In einer Bestätigungsnachricht ACM wird von dem besonderen Gruppenmitglied DPC, zu dem der Anruf umgelenkt wurde, die zugehörige Rufnummer CNC zur Mobilvermittlungsstelle AMSC übertragen (4). Die Mobilvermittlungsstelle AMSC ersetzt die empfangene Rufnummer CNC durch die Rufnummer der Gruppe und sendet diese Rufnummer GCN in der Bestätigungsnachricht ACM zum besonderen Gruppenmitglied DPB' zurück. Von dort wird die Rufnummer GCN zum anrufenden besonderen Gruppenmitglied DPA rückgesendet (5, 6). An der Teilnehmerstation des anrufenden besonderen Gruppenmitglieds DPA wird die Gruppenrufnummer GCN angezeigt.

Dies bedeutet, daß dem anrufenden besonderen Gruppenmitglied DPA nicht die Rufnummer eines bestimmten besonderen Gruppenmitglieds, nämlich des Gruppenmitglieds DPC, der angerufenen Gruppe angezeigt wird, sondern die Rufnummer der Gruppe, zu der der Anruf als Gruppenanruf umgelenkt wird. Dies ist die Rufnummer, die das anrufende besondere Gruppenmitglied DPA wählen würde, wenn es denselben Gruppenanruf direkt ohne Umlenkung durch das besondere Gruppenmitglied DPB' zur angerufenen Gruppe aussenden wollte.

Von der Einrichtung CB wird die Konferenzschaltung aktiviert, die zum Aufbau der Anrufverbindungen zu den Funkteilnehmerstationen TMS der mithörenden Gruppenmitglieder GMB und GMC über die Basisstationssteuerung BSC1 und die Basis-Sende/Empfangsstationen BTS1 und BTS2 sowie zum Aufbau der Anrufverbindungen zu den Funkteilnehmerstationen TMS der mithörenden Gruppenmitglieder GMD und GME über die Basisstationssteuerung BSC2 und die Basis-Sende/Empfangsstationen BTS3 und BTS4 führt. Die Funkteilnehmer GMB...GME und die besonderen Gruppenmitglieder DPA, DPB' und DPC bilden die Teilnehmer der von dem Gruppenanruf betroffenen Gruppe.

Beispielsweise ruft das besondere Gruppenmitglied DPA (Dispatcher A), das im Festnetz eine Rufnummer 08972212345 hat, das besondere Gruppenmitglied DPB' (Dispatcher B') an, das im Festnetz eine Rufnummer 0662116998 aufweist. Das besondere Gruppenmitglied DPB' lenkt den Anruf zu einer Gruppe von Funkteilnehmern der Gruppenidentifikationsnummer 555 in einem Servicegebiet mit der Gebietsidentifikationsnummer 2131 als Gruppenanruf (VBS) um. Die Rufnummer der Gruppe, die gemäß der Erfindung beim anrufenden besonderen Gruppenmitglied DPA als COLP und beim besonderen Gruppenmitglied DPC als CLIP angezeigt wird, ist beispielsweise 01711982131555. Die mit dem Gruppenanruf erreichbaren Gruppenmitglied GMB...GME, sind beispielsweise alle Speisewagenkellner im Gebiet Frankfurt, zu deren Funkteilnehmerstationen TMS der Anruf von ihrem "Chef" als besonderes Gruppenmitglied DPB' umgelenkt wurde. Dies bedeutet, daß gemäß der Erfindung dem angerufenen besonderen Gruppenmitglied DPC nicht die Rufnummer (08972212345) des den Gruppenanruf initiierenden besonders Gruppenmitglieds DPA, sondern die Rufnummer (01711982131555) angezeigt wird, die von dem angerufenen besonderen Gruppenmitglied DPC bei Aussenden desselben Gruppenanrufs zu den mithörenden Gruppenmitgliedern GMB'...GME derselben Gruppe in demselben Servicegebiet gewählt würde. Dem anrufenden besonderen Gruppenmitglied DPA wird anstelle der Rufnummer des besonderen Gruppenmitglieds DPC die Rufnummer (01711982131555) der Gruppe angezeigt. Die angezeigte Rufnummer GCN enthält Informationen zur Identifikation der Art des Gruppenanrufs (VBS oder VGCS - Indication), zur Identifikation des Servicegebiets (Service Area Identity), sowie zur Identifikation der jeweiligen Gruppe von Teilnehmern (Group Identity). Zusätzlich zur Rufnummer GCN der Gruppe kann als Adressenzusatzinformation die Rufnummer des anrufenden Teilnehmers an der Teilnehmerstation des angerufenen besonderen Gruppenmitglieds DPC angezeigt werden.

## Patentansprüche

1. Verfahren zur Anzeige von Rufnummern an Teilnehmerstationen von anrufenden Teilnehmern oder angerufenen Teilnehmern, die durch eine Anrufverbindung in einem leitungsgebundenen Kommunikationsnetz erreichbar sind und in Gruppenanrufe, die an eine Gruppe von Funkteilnehmern eines Mobilfunknetzes gerichtet werden, als besondere Gruppenmitglieder (DPB) der Gruppe eingebunden werden können
**dadurch gekennzeichnet,**
**daß** bei einem Gruppenanruf im Mobilfunknetz die Rufnummer des anrufenden Gruppenmitglieds (GMA) oder die Rufnummer (CNC) des angerufenen Gruppenmitglieds (GMA') durch die Rufnummer (GCN) der Gruppe, die von dem besonderen Gruppenmitglied (DPB oder DPA) bei Initiieren desselben Gruppenanrufs gewählt wird, ersetzt wird und daß die Rufnummer (GCN) der Gruppe zu der Teilnehmerstation des besonderen Gruppenmitglieds (DPB) gesendet und dort angezeigt wird.

2. Verfahren nach Anspruch 1,
**dadurch gekennzeichnet,**
**daß** bei Initiieren eines Gruppenanrufs durch einen Teilnehmer (GMA) der Gruppe die Rufnummer (GCN) der Gruppe an der Teilnehmerstation des mit dem Gruppenanruf angerufenen besonderen Gruppenmitglieds (DPB) angezeigt wird.

3. Verfahren nach Anspruch 2,
**dadurch gekennzeichnet,**
**daß** zusätzlich zur Rufnummer (GCN) der Gruppe die Rufnummer des Teilnehmers, der den Gruppenanruf initiiert hat, als Adresseninformation (SA) an der Teilnehmerstation des besonderen Gruppenmitglieds (DPB) angezeigt wird.

4. Verfahren nach einem der vorhergehenden Ansprüche,
**dadurch gekennzeichnet,**
**daß** bei einem Anruf, der von einem Teilnehmer (DPA) initiiert und an ein besonderes Gruppenmitglied (DPB') einer Gruppe von Funkteilnehmern gerichtet wird, das den Anruf als Gruppenanruf zu mehreren Funkteilnehmern (GMA', GMB, GMC, GMD, GME) dieser Gruppe umlenkt, die Rufnummer (GCN) der angerufenen Gruppe an der Teilnehmerstation des anrufenden Teilnehmers (DPA) angezeigt wird.

5. Kommunikationssystem zur Anzeige von Rufnummern an Teilnehmerstationen von anrufenden Teilnehmern oder angerufenen Teilnehmern, die durch eine Anrufverbindung in einem leitungsgebundenen Kommunikationsnetz erreichbar sind und in Gruppenanrufe, die an eine Gruppe von Funkteilnehmern eines Mobilfunknetzes gerichtet werden, eingebunden sind
**dadurch gekennzeichnet,**
**daß** bei einem Gruppenanruf im Mobilfunknetz die Rufnummer des anrufenden Gruppenmitglieds (GMA) oder die Rufnummer (CNC) des angerufenen Gruppenmitglieds (GMA') durch die Rufnummer (GCN) der Gruppe, die von dem besonderen Gruppenmitglied (DPB oder DPA) bei Initiieren desselben Gruppenanrufs gewählt wird, ersetzt wird und daß die Rufnummer (GCN) der Gruppe zu der Teilnehmerstation des besonderen Gruppenmitglieds (DPB) gesendet und dort angezeigt wird.

6. Kommunikationssystem nach einem Anspruch 5,
**dadurch gekennzeichnet,**
**daß** von einer für den Gruppenanruf zuständigen Mobilvermittlungsstelle (AMSC) des Mobilfunknetzes die Rufnummer des anrufenden Gruppenmitglieds (GMA) oder die Rufnummer (CNC) des angerufenen Gruppenmitglieds (GMA') durch die Rufnummer (GCN) der Gruppe ersetzt und zur Anzeige an die Teilnehmerstation des besonderen Gruppenmitglieds (DPB) gesendet wird.

7. Teilnehmerstation zur Anzeige von Rufnummern anrufender Teilnehmer oder angerufener Teilnehmer, die durch eine Anrufverbindung in einem leitungsgebundenen Kommunikationsnetz erreichbar sind und in Gruppenanrufe, die an eine Gruppe von Funkteilnehmern eines Mobilfunknetzes gerichtet werden, als besondere Gruppenmitglieder (DPB) der Gruppe eingebunden werden können
**dadurch gekennzeichnet,**
**daß** bei einem Gruppenanruf im Mobilfunknetz an Stelle der Rufnummer des anrufenden Gruppenmitglieds (GMA) oder der Rufnummer (CNC) des angerufenen Gruppenmitglieds (GMA') eine Rufnummer (GCN) der Gruppe (GCN), die von dem besonderen Gruppenmitglied (DPB oder DPA) bei Initiieren desselben Gruppenanrufs gewählt wird, von der Teilnehmerstation des besonderen Gruppenmitglieds (DPB) empfangen und angezeigt wird.

## Claims

1. Method for displaying call numbers on subscriber stations of calling subscribers or called subscribers who are accessible by means of a call connection in a line-connected communication network and can be included as special group members (DPB) of the group in group calls that are addressed to a group of radio subscribers of a mobile radio network,
**characterised in that**
when a group call is initiated in the mobile radio network, the call number of the calling group member (GMA) or the call number (CNC) of the called group member (GMA') is replaced by the call number (GCN) of the group selected by the special group member (DPB or DPA) upon initiating the same group call and that the call number (GCN) of the group is sent to the subscriber station of the special group member (DPB) and displayed there.

2. Method according to claim 1,
**characterised in that**
when a group call is initiated by a subscriber (GMA) of the group, the call number (GCN) of the group is displayed on the subscriber station of the special group member (DPB) called by means of the group call.

3. Method according to claim 2,
**characterised in that**
the call number of the subscriber who initiated the group call is displayed as address information (SA) on the subscriber station of the special group member (DPB) in addition to the call number (GCN) of the group.

4. Method according to one of the preceding claims,
**characterised in that**
in the case of a call initiated by a subscriber (DPA) and addressed to a special group member (DPB') of a group of radio subscribers who redirects the call as a group call to a plurality of radio subscribers (GMA', GMB, GMC, GMD, GME) of said group, the call number (GCN) of the called group is displayed on the subscriber station of the calling subscriber (DPA).

5. Communication system for displaying call numbers on subscriber stations of calling subscribers or called subscribers who are accessible by means of a call connection in a line-connected communication network and are included in group calls which are addressed to a group of radio subscribers of a mobile radio network,
**characterised in that**
when a group call is initiated in the mobile radio network, the call number of the calling group member (GMA) or the call number (CNC) of the called group member (GMA') is replaced by the call number (GCN) of the group selected by the special group member (DPB or DPA) upon initiating the same group call and that the call number (GCN) of the group is sent to the subscriber station of the special group member (DPB) and displayed there.

6. Communication system according to claim 5,
**characterised in that**
the call number of the calling group member (GMA) or the call number (CNC) of the called group member (GMA') is replaced with the call number (GCN) of the group by a mobile switching centre (AMSC) of the mobile radio network that is responsible for the group call and is sent for displaying to the subscriber station of the special group member (DPB).

7. Subscriber station for displaying call numbers of calling subscribers or called subscribers who are accessible by means of a call connection in a line-connected communication network and can be included as special group members (DPB) of the group in group calls which are addressed to a group of radio subscribers of a mobile radio network,
**characterised in that**
when a group call is initiated in the mobile radio network, a call number (GCN) of the group (GCN) selected by the special group member (DPB or DPA) upon initiating the same group call is received and displayed by the subscriber station of the special group member (DPB) in place of the call number of the calling group member (GMA) or the call number (CNC) of the called group member (GMA').

## Revendications

1. Procédé pour l'affichage de numéros d'appel à des stations d'abonnés appelant ou d'abonnés appelés, qui peuvent être joints par une liaison d'appel dans un réseau de communication par ligne et peuvent être intégrés dans des appels de groupe, qui sont adressés à un groupe d'abonnés radio d'un réseau de téléphonie mobile, en tant que membres de groupe (DBP) particuliers du groupe,
**caractérisé en ce que**,
lors d'un appel de groupe dans le réseau de téléphonie mobile, le numéro d'appel du membre de groupe (GMA) appelant ou le numéro d'appel (CNC) du membre de groupe (GMA') appelé est remplacé par le numéro d'appel (GNC) du groupe qui est choisi par le membre de groupe (DPB ou DPA) particulier en cas d'initiation du même appel de groupe, et **en ce que** le numéro d'appel (GCN) du groupe est envoyé à la station d'abonné du membre de groupe (DPB) particulier et est affiché à cet endroit.

2. Procédé selon la revendication 1,
**caractérisé en ce que**,
en cas d'initiation d'un appel de groupe par un abonné (GMA) du groupe, le numéro d'appel (GCN) du groupe est affiché à la station d'abonné du membre du groupe (DPB) particulier appelé avec l'appel de groupe.

3. Procédé selon la revendication 2,
**caractérisé en ce que**,
en supplément du numéro d'appel (GCN) du groupe, le numéro d'appel de l'abonné, qui a initié l'appel de groupe, est affiché comme information d'adresse (SA) à la station d'abonné du membre du groupe particulier (DPB).

4. Procédé selon l'une quelconque des revendications précédentes, **caractérisé en ce que**, lors d'un appel qui est initié par un abonné (DPA) et est destiné à un membre du groupe (DPB') particulier d'un groupe d'abonnés radio, qui dévie l'appel sous la forme d'appel de groupe vers plusieurs abonnés radio (GMA', GMB, GMC, GMD, GME) de ce groupe, le numéro d'appel (GCN) du groupe appelé est affiché à la station d'abonné de l'abonné (DPA) appelant.

5. Système de communication pour l'affichage de numéros d'appel sur des stations d'abonnés appelant ou d'abonnés appelés, qui peuvent être joints par une liaison d'appel dans un réseau de communication par ligne et qui sont intégrés dans des appels de groupe qui sont destinés à un groupe d'abonnés radio d'un réseau de téléphonie mobile,
**caractérisé en ce que**,
lors d'un appel de groupe dans le réseau de téléphonie mobile, le numéro d'appel du membre du groupe appelant (GMA) ou le numéro d'appel (CNC) du membre du groupe (GMA') appelé est remplacé par le numéro d'appel (GNC) du groupe qui est choisi par le membre du groupe (DPB ou DPA) particulier en cas d'initiation du même appel de groupe et **en ce que** le numéro d'appel (GCN) du groupe est envoyé à la station d'abonné du membre de groupe (DPB) particulier et y est affiché.

6. Système de communication selon une revendication 5,
**caractérisé en ce que**,
un centre de commutation du service mobile (AMSC) compétent pour l'appel de groupe, du réseau de téléphonie mobile remplace le numéro d'appel du membre de groupe (GMA) appelant ou le numéro d'appel (CNC) du membre de groupe (GMA') appelé par le numéro d'appel (GCN) du groupe et l'envoie pour l'affichage à la station d'abonné du membre de groupe (DPB) particulier.

7. Station d'abonné pour l'affichage de numéros d'appel d'abonnés appelant ou d'abonnés appelés, qui peuvent être joints par une liaison d'appel dans un réseau de communication par ligne et être intégrés dans des appels de groupe, qui sont destinés à un groupe d'abonnés radio d'un réseau de téléphonie mobile, sous la forme de membres de groupe (DPB) particuliers du groupe,
**caractérisée en ce que**,
lors d'un appel de groupe dans le réseau de téléphonie mobile, à la place du numéro d'appel du membre de groupe (GMA) appelant ou du numéro d'appel (CNC) du membre de groupe (GMA') appelé, un numéro d'appel (GCN) du groupe (GCN), qui est choisi par le membre de groupe (DPB ou DPA) particulier en cas d'initiation du même appel de groupe, est reçu par la station d'abonné du membre de groupe (DPB) particulier et y est affiché.
